# EUROPÄISCHE PATENTSCHRIFT

(11) **EP 0 769 359 B1**
(45) Veröffentlichungstag und Bekanntmachung des Hinweises auf die Patenterteilung: **26.09.2001**
(21) Anmeldenummer: 96116053.8
(22) Anmeldetag: 08.10.1996
(51) Int. Cl.: B29C 44/46

(54) **Verfahren und Vorrichtung zur kontinuierlichen Herstellung von Polyurethan-Blockschaum**
Method and device for the continuous production of polyurethane foam blocks
Procédé et dispositif pour la production en continu de blocs en mousse de polyuréthane

(30) Priorität: 20.10.1995 DE 19539072
(43) Veröffentlichungstag der Anmeldung: 23.04.1997
(73) Patentinhaber: Hennecke GmbH, 51379 Leverkusen (DE)
(72) Erfinder: Steilen, Herbert, 53639 Königswinter (DE); Raffel, Reiner, 53721 Siegburg (DE); Eiben, Robert, Dr., 51061 Köln (DE); Ebeling, Wilfried, 51069 Köln (DE)
(74) Vertreter: Drope, Rüdiger, Dr.

(56) Entgegenhaltungen:
- WO-A-96/00644
- DE-A- 2 405 228
- DE-A- 3 037 444
- US-A- 3 007 200
- US-A- 3 579 722

## Beschreibung

Zur kontinuierlichen Herstellung von Polyurethan-Blockschaum werden die Reaktionskomponenten für die Polyisocyanat-Polyadditionsreaktion (Isocyanat und Polyol) sowie ein Schäummittel in einem Mischkopf vermischt, aus dem Mischkopf auf das Transportband einer Blockschaumanlage aufgebracht, die Reaktionsmasse aufschäumen gelassen, ausgehärtet und in Blöcke geschnitten. Die Technologie ist im Becker/Braun: Kunststoff-Handbuch, Band 7, 1993, Seiten 148 und 149, beschrieben.

Als Schäummittel wurde bereits verschiedentlich vorgeschlagen, in der Reaktivmischung bzw. vor der Herstellung der Reaktivmischung in einer der Komponenten Kohlendioxid unter Druck zu lösen, wobei das Kohlendioxid nach der Entspannung in Form kleiner Gasblasen in der Reaktivmischung freigesetzt wird, d.h. ein Froth entsteht (GB-A 803 771, US-A 3 184 419, US-A 4 906 672, US-A 5 120 770, EP-A 645 226). Dabei kann als zusätzliches Treibmittel Wasser eingesetzt werden, wobei aufgrund der Reaktion des Isocyanats mit dem Wasser zusätzlich CO₂ freigesetzt wird.

Gegenüber herkömmlichen Schäummitteln, wie Fluorkohlenwasserstoffen oder niedrigsiedenden Kohlenwasserstoffen, die erst aufgrund der bei fortschreitender Reaktion eintretenden Temperaturerhöhung freigesetzt werden, tritt der mittels unter Druck gelöstem CO₂ erzeugte Froth aus dem dem Mischaggregat nachgeschalteten Entspannungsorgan einerseits mit - im Vergleich zu der Transportbandgeschwindigkeit (4 bis 8 m/min) - relativ hohen Geschwindigkeit von 0,5 bis 5 m/s aus, und andererseits besitzt der Froth im Vergleich zur nicht geschäumten Reaktivmischung ein relativ geringes Fließvermögen. Dies führt bei den heute gewünschten Blockabmessungen von 1,80 bis 2,50 m Breite zu erheblichen Problemen der Verteilung des Froth über die Breite des Transportbandes.

Gemäß EP-A 645 226 wurde daher bereits vorgeschlagen, das dem Mischaggregat nachgeschaltete Entspannungsorgan quer zum Transportband, entsprechend der Transportbandbreite ausgedehnt, auszubilden und einen entsprechend quer zum Transportband ausgedehnten Aufschäumhohlraum an das Entspannungsorgan anzuschließen, aus der der Froth im wesentlichen parallel zur Transportbandrichtung austritt, wobei in dem Aufschäumhohlraum offenbar auch eine Reduktion der Fließgeschwindigkeit des Froth bewirkt wird Obwohl bei einer solchen Vorrichtung eine Querverteilung des Froth auf dem Transportband unterbleiben kann, da der Froth bereits in einer Geometrie, die dem Transportband entspricht, auf diesem abgelegt wird, hat sich als nachteilig erwiesen, daß der Froth innerhalb des Aufschäumhohlraums sich in Kontakt mit relativ großen starren Flächen bewegt und in der Nähe dieser Flächen geschert wird, so daß es im Kontakt mit den Begrenzungsflächen des Aufschäumhohlraums zur Zerstörung von Schaumblasen kommt, so daß der erzeugte Blockschaum unerwünschte Lunker und eine ungleichmäßige Schaumstruktur aufweist. Insbesondere können an der unteren Begrenzungsfläche des Auschäumhohlraums innerhalb des Aufschäumhohlraums durch Zerstörung von Schaumblasen erzeugte Lunker nicht mehr freigesetzt werden, sondern dringen in die Schaummasse ein, wo sie im Zuge der Verfestigung des Schaumes festgehalten werden.

Ein Verfahren gemäß dem Oberbegriff des Anspruchs 1 ist aus der DE-A-3 037 444 bekannt.

Nach der zum Stand der Technik gemäß Art.54(3) EPÜ gehörenden EP-A-0 767 728 wird der in einer kreissymmetrischen, d.h. nicht quer zum Transportband ausgedehnten, Entspannungsvorrichtung erzeugte Froth im wesentlichen senkrecht frei fallend in einen quer zum Transportband ausgebildeten Trog mit in Fließrichtung des Froth bewegten Wänden eingeleitet. Der Trog wird auf der in Bewegungsrichtung des Transportbands gelegenen Seite der Entspannungseinrichtung durch die im wesentlichen senkrecht über eine Umlenkrolle zugeführte obere Kaschierfolie und auf der der Bewegungsrichtung des Transportbandes entgegengesetzten Seite durch eine im wesentlichen senkrecht zugeführte und über eine Umlenkrolle in Schleifkontakt mit der unteren Kaschierfolie abgeführte Hilfsfolie gebildet. Nachteilig bei dieser Anordnung ist der in dem Trog erzeugte Stau, der bis zum Durchtritt des Froth unter die Umlenkrolle für die obere Kaschierfolie diesen in eine reine Querbewegung zwingt und andererseits die im Bereich des Schleifkontaktes zwischen Hilfsfolie und unterer Kaschierfolie bewirkte Scherung des Froth.

Die genannten Nachteile werden durch die vorliegende Erfindung überwunden.

Gegenstand der vorliegenden Erfindung ist ein Verfahren zur Herstellung von Polyurethan-Schaumstoff durch Aufbringen eines Froth auf das Transportband einer Blockschaumanlage, wobei der Froth in freiem, im wesentlichen senkrechten Fall auf das untere Transportband aufgebracht wird, das dadurch gekennzeichnet ist, daß ein Fließen des Froth gegen die Richtung der Bewegung des Transportbandes durch eine ortsfeste, quer auf dem Transportband angeordnete, im wesentlichen senkrechte Barriere in Form einer ebenen Platte verhindert wird.

Der Froth wird dadurch erzeugt, dass in mindestens einer der Komponenten der Polyisocyanat-Polyadditionsreaktion, vorzugsweise in der Polyolkomponente, ein bei Raumtemperatur und Umgebungsdruck gasförmiges Schäummittel unter Druck gelöst wird, die Reaktionskomponenten einem Mischaggregat zugeführt werden, und die das Schäummittel unter Druck gelöst enthaltende Reaktionsmischung in einem Entspannungsaggregat (Druckreduktionsaggregat) unter Freisetzung des gelösten Schäummittels in Form feiner Gasblasen kontinuierlich auf Umgebungsbedingungen entspannt wird. Bevorzugtes Schäummittel ist CO₂.

Als Druckreduktionsaggregat sind eine oder mehrere Durchtrittsöffnung(en) für die Reaktionsmischung mit geringem Querschnitt in mindestens einer Dimension, z. B. Durchtrittsspalte oder Bohrungen mit einem Durchmesser zwischen 0,03 und 0,2 mm, geeignet, die dem Druchtritt der Reaktivmischung einen ausreichend großen Widerstand entgegensetzen, dass stromaufwärts des Entspannungsaggregates ein ausreichender Druck aufrechterhalten wird, der das Schäummittel in Lösung hält. Vorzugsweise besteht das Druckreduktionsaggregat aus einer oder mehreren Platte(n) mit einer Vielzahl von Bohrungen mit einem Durchmesser von 0,05 bis 0,15 mm. Im Falle, dass mehrere Lochplatten hintereinander eingesetzt werden, sollen diese einen so kurzen Abstand haben, dass aufgrund der Relaxationszeit der Freisetzung des gelösten Schäummittels zwischen den Lochplatten im wesentlichen noch keine Ausbildung von Schaumblasen erfolgt. Insbesondere bevorzugt besteht das Druckreduktionsaggregat aus einer oder mehreren Lochplatten mit einer freien Durchtrittsfläche aller Löcher von 0,5 bis 5 % (Druckhalte-Siebplatten) sowie einer weiteren Lochplatte mit einer freien Durchtrittsfläche von insgesamt 8 bis 30 % (Geschwindigkeitsreduktionsplatte). Vorzugsweise resultiert die größere freie Querschnittsfläche der Geschwindigkeitsreduktionsplatte in einer entsprechend um 5- bis 20mal höheren Anzahl von Durchtrittsbohrungen. Ein solches Druckreduktionsaggregat ist in dem nicht vorveröffentlichten Vorschlag der Anmelderin gemäß DE-A 195 24 434.6 beschrieben.

Vorzugsweise ist die Auslassöffnung mittig über dem Transportband angeordnet und weist eine Ausdehnung quer zur Transportbandrichtung von 5 bis 20 %, vorzugsweise von 7 bis 10 %, der Transportbandbreite auf.

Idealerweise weist das Druckreduktionsaggregat einen kreisrunden Auslaßquerschnitt auf, so daß die Störungen, die aufgrund des Kontaktes des Froth mit dem Auslaßrand auftreten können, gering gehalten werden. Dennoch auftretende Störungen aufgrund der Agglomeration von Schaumblasen am Auslaßrand des Druckreduktionsaggregates werden durch den Kontakt der Peripherie des im wesentlichen senkrecht frei fallenden Froth-Stromes mit der Atmosphäre durch Aufplatzen der durch Agglomerierung entstandenen großen Blasen am Auslaßrand geheilt.

Aus Gründen der mechanischen Stabilität kann es jedoch erforderlich sein, die Auslaßöffnung der Schäumvorrichtung, d.h. die Siebplatten, länglich ausgedehnt zu gestalten, wenn die an der Siebplatte angreifenden Kräfte bei kreisrundem Querschnitt zu groß würden.

Vorzugsweise fällt der Froth-Strom, der eine Geschwindigkeit von 0,5 bis 5 m/sec, bevorzugt 0,5 bis 2 m/sec, aufweisen kann, aus einer Höhe von 40 bis 80 cm über dem unteren Transportband im wesentlichen senkrecht in Richtung auf das Transportband. Eine leichte Neigung des Froth-Stromes in Transportbandrichtung von z.B 20° kann vorteilhaft sein.

Zur Vermeidung eines sich entgegen der Bewegungsrichtung des Transportbandes ausbreitenden Froth-Haufens auf dem Transportband ist nun quer über das Transportband eine im wesentlichen senkrechte Barriere in Form einer ebenen Platte, angeordnet. Der Fußpunkt der Platte liegt vorzugsweise etwas - bezüglich der Transportbandrichtung - rückwärtig zum Schnittpunkt der Achse des Froth-Stroms mit dem Transportband. Die Barriere kann um einen Winkel α von bis zu 30°, vorzugsweise nur bis zu 20°, gegen die Senkrechte auf dem Transportband entgegen der Bewegungsrichtung des Transportbands geneigt sein.

Vorzugsweise besteht die Barriere aus einem Material, das von der Polyurethan-Reaktionsmischung nicht oder schwer benetzt wird, oder ist zumindest mit einem solchen Material beschichtet. Geeignete Materialien sind Polyethylen, Polytetrafluorethylen oder Silikon.

Natürlich stellt die Kontaktfläche zwischen Barriere und dem Froth aufgrund der auftretenden Relativgeschwindigkeiten insbesondere in dem Bereich, in dem der Froth auf die Barriere auftritt, eine Störung dar, bei der es zur Agglomeration von Schaumblasen kommen kann, d.h. zur Ausbildung von größeren Blasen bzw. Lunkern. Überraschenderweise werden solche großen Blasen und Lunker in dem fertigen Schaum nicht beobachtet. Offenbar können sich ausbildende größere Blasen und Lunker an der im wesentlichen senkrechten Barriere haften bleiben, weiter wachsen und bei Erreichen einer ausreichenden Größe entgegen oder zumindest quer zur Abgleitrichtung des Froth an der Barriere aufsteigen und den Froth verlassen.

In Richtung quer zur Transportbandrichtung und auf der der Barriere gegenüberliegenden Seite breitet sich der durch das Auftreffen des Froth-Stromes sich ausbildende Froth-Haufen aufgrund der Schwerkraft und des Fließvermögens des Froth frei fließend aus.

Die Barriere kann beidseitig von der Transportbandmitte her in Transportbandrichtung abgeknickt oder gebogen sein. Jedoch soll der Froth, der quer an der Barriere abfließt, nicht schneller als die Transportbandgeschwindigkeit in Transportbandrichtung gezwungen werden. Insbesondere soll die Barriere beidseitig einen Winkel von weniger als 20°, bevorzugt weniger als 10°, mit der Richtung quer zur Bewegung des Transportbandes bilden.

Zur weiteren Querverteilung des Froth über das Transportband kann im Abstand von der Zufuhrstelle des Froth-Stromes eine in den Froth eintauchende, quer über das Transportband verlaufende Walze vorgesehen sein, über die unter Umlenkung die obere Kaschierfolie zugeführt wird. Der Abstand der Walze in Transportbandrichtung von der Achse des im wesentlichen senkrecht zugeführten Froth-Stromes soll vorzugsweise mindestens ein Drittel der Transportbandbreite betragen. Insbesondere bevorzugt ist die Zufuhr- und Umlenkwalze für die obere Kaschierfolie etwa an einer Stelle auf dem Transportband angeordnet, an dem die Polyisocyanat-Polyadditionsreaktion merklich einsetzt, d.h, im Falle der zusätzlichen Verwendung von Wasser als chemisches Schäummittel, der Schaum zu steigen beginnt.

Die Erfindung wird nachfolgend anhand der beigefügten Figuren 1 bis 6 näher erläutert.
- Fig. 1: zeigt in schematisierter Seitenansicht eine erste Vorrichtung zur Durchführung des erfindungsgemäßen Verfahrens.
- Fig. 2: zeigt eine schematisierte Aufsicht auf die Vorrichtung gemäß Fig. 1.
- Fig. 3: zeigt eine Vorrichtung gemäß Fig. 1 mit alternativer Ausführungsform der Barriere.
- Fig. 4: zeigt eine Vorrichtung gemäß Fig. 1 mit alternativer Zuführung der unteren Kaschierfolie.
- Fig. 5: erläutert das Fließen des Froth entlang der Barriere und eine Vorstellung über das Entkommen von großen Gasblasen aus dem Froth
- Fig. 6: zeigt ein erfindungsgemäß einsetzbares Druckreduktionsaggregat im Querschnitt.

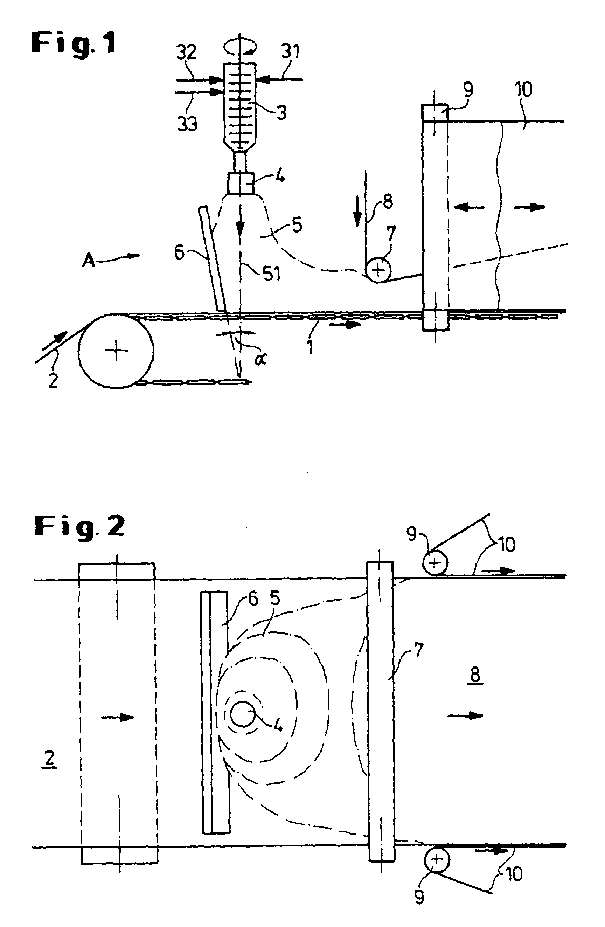

In Fig. 1 ist in Seitenansicht das Transportband 1 einer Blockschaumanlage dargestellt. Dem Transportband 1 wird eine untere Kaschierfolie 2 zugeführt, die mit dem Transportband in einer Geschwindigkeit von 3 bis 7 m/min nach rechts bewegt wird. Dem Mischaggregat 3 werden unter Druck Isocyanat 31 und Polyol 32, das 3 bis 7 Gew.-% Kohlendioxid gelöst enthalten kann, sowie weitere Zusatz- und Hilfsstoffe 33 zugeführt. Im Mischaggregat herrscht ein Druck, der oberhalb des Sättigungsdampfdrucks für das gelöste Kohlendioxid liegt. Aus dem Mischaggregat 3 wird die Reaktionsmischung dem Druckreduktionsaggregat 4 zugeführt, auf dem die Reaktionsmischung unter Aufschäumen als Froth 5 in Richtung der punktstrichlierten Linie 51 frei fließend austritt. Die im wesentlichen senkrechte, plattenförmige Barriere 6 verhindert das Ausbreiten des Froth 5 entgegen der Bewegungsrichtung des Transportbandes 1. Zur Vermeidung des Lufteintritts zwischen unterer Kaschierfolie 2 und Unterkante der Barriere 6 liegt diese schleifend auf der unteren Kaschierfolie 2 auf. Vorzugsweise ist die Barriere 6 in Längsrichtung des Transportbandes verschiebbar und um eine Achse quer zum Transportband drehbar gehaltert, so daß während der Produktion die Stellung der Barriere 6 optimiert werden kann. In Bewegungsrichtung des Transportbandes im Abstand von der Zufuhrstelle des Froth 5 wird die obere Kaschierfolie 8 über eine in den Froth 5 eintauchende Umlenkrolle 7 zugeführt. Ferner werden beidseitig des Transportbandes seitliche Kaschierfolien 10 über Umlenkrollen 9 zugeführt

In der in Fig. 2 dargestellten Aufsicht auf die Vorrichtung gemäß Fig. 1 bezeichnen gleiche Bezugszeichen gleiche Elemente wie in Fig 1.

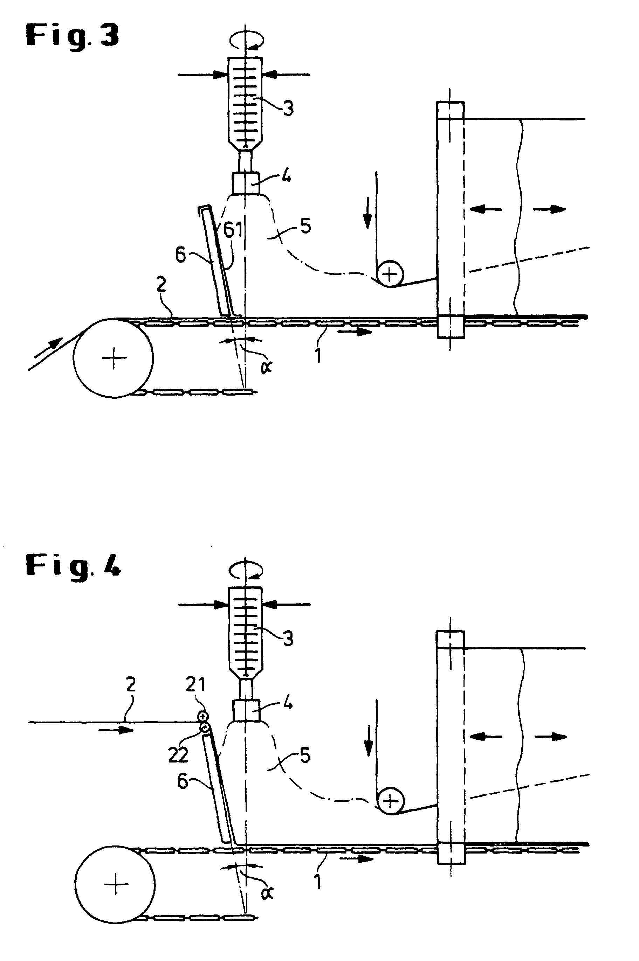

In Fig. 3 ist die Barriereplatte 6 durch eine nicht von der Polyurethan-Reaktionsmischung benetzbare Polyethylenfolie 61 abgedeckt, die bei Produktionsstillständen leicht ausgewechselt werden kann.

In der Darstellung gemäß Fig. 4 wird die untere Kaschierfolie 2 mittels Walzen 21, 22, von denen eine angetrieben ist, über die Barriere 6 gleitend zugeführt.

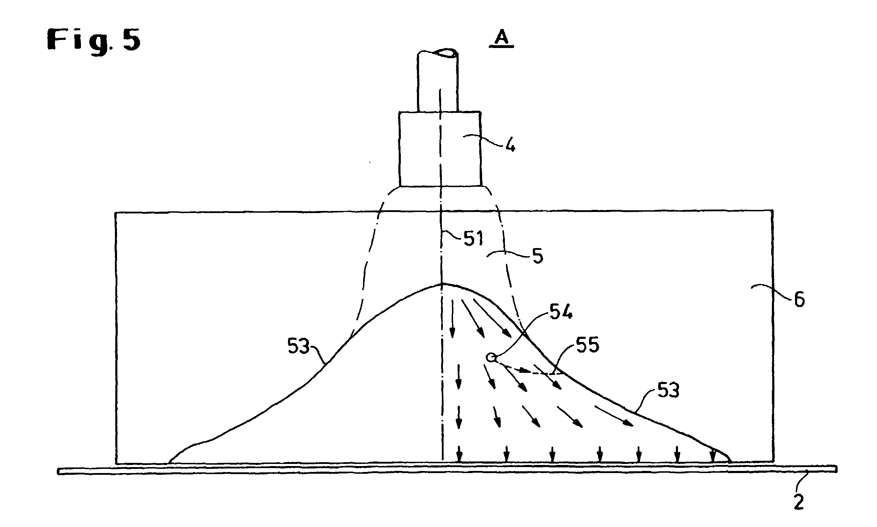

Fig. 5 zeigt eine Ansicht in Richtung Pfeil A der Fig. 1. Gleiche Bezugszeichen bezeichnen gleiche Elemente wie in Fig. 1. Unter der Annahme, die Barriere 6 sei eine Glasscheibe, wird die Kontur 53 des Froth auf der Barriere 6 sichtbar. Die innerhalb der Kontur 53 eingezeichneten Pfeile geben in etwa Fließrichtung und -geschwindigkeit des Froth auf der Barriere 6 an. Aufgrund des Fließens des Froth auf der Barriere 6 nimmt eine sich etwa durch Agglomeration von Schaumblasen ausgebildete große Blase 54 den Weg entlang der strichlierten Linie 55 und tritt durch die Konturlinie 53 aus, so daß die große Gasblase 54 nicht in den Schaum eingebaut wird.

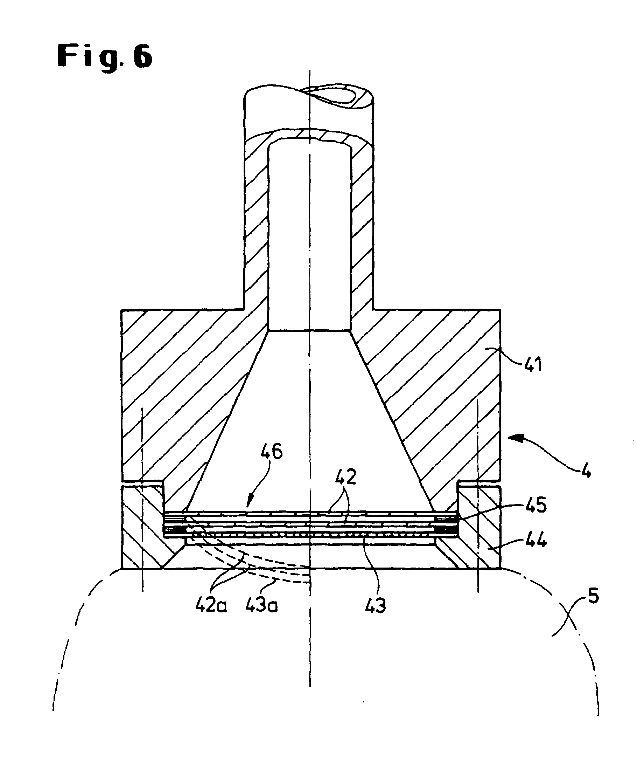

Fig. 6 zeigt beispielhaft ein erfindungsgemäß einsetzbares Druckreduktionsaggregat 4. Dieses besteht aus einem zylindrischen Gehause 41, dem von oben Kohlendioxid gelöst enthaltendes Polyurethan-Reaktionsgemisch unter einem Druck von z.B. 10 bis 15 bar zugefuhrt wird. Am Austritt sind Lochplatten 42, 43 vorgesehen, wobei die Lochplatten 42 eine Vielzahl von Bohrungen 46 von 0,1 mm Durchmesser aufweisen, die in der Summe eine freie Durchtrittsquerschnittfläche von 2 % der Lochplatten 42 ausmachen. Beim Durchgang durch die Lochplatten 42 wird der Druck der Reaktivmischung innerhalb kürzester Zeit abgebaut. Die weitere Lochplatte 43 weist etwa 10-mal soviel Bohrungen des Durchmessers 0,1 mm auf wie die Lochplatten 42 entsprechend einer freien Durchtrittsfläche von 20 %, so daß die Durchtrittsgeschwindigkeit durch die Lochplatte 43 nur ein Zehntel der Durchtrittsgeschwindigkeit durch die Lochplatten 42 beträgt. Nach dem Durchtritt durch die Lochplatte 43 wird das geloste Kohlendioxid aus der Reaktionsmischung innerhalb von 10⁻² bis 10⁻⁴ Sekunden freigesetzt, wobei sich die glockenförmige Kontur des Froth 5 ausbildet. Bevorzugt werden anstelle der ebenen Siebplatten 42, 43 gewölbte Siebplatten 42a, 43a, wie im Halbschnitt angedeutet, eingesetzt.

## Patentansprüche

1. Verfahren zur Herstellung von Polyurethan-Schaum durch Aufbringen eines Froth auf das Transportband einer Blockschaumanlage, wobei der Froth in freiem, im wesentlichen senkrechten Fall auf das untere Transportband aufgebracht wird, **dadurch gekennzeichnet, dass** ein Fließen des Froth gegen die Richtung der Bewegung des Transportbandes (1) durch eine ortsfeste, quer auf dem Transportband angeordnete, im wesentlichen senkrechte Barriere (6) in Form einer ebenen Platte verhindert wird.

2. Verfahren nach Anspruch 1, **dadurch gekennzeichnet, dass** der Froth in einer sich weniger als 20 % der Transportbandbreite quer zum Transportband erstreckenden, idealerweise im wesentlichen kreissymmetrischen, als Druckreduktionsaggregat ausgebildeten Schäumvorrichtung erzeugt wird.

3. Vorrichtung zur Herstellung von Polyurethan-Schaum, bestehend aus einer an sich bekannten kontinuierlichen Blockschaumanlage, einer über dem Transportband der Blockschaumanlage angeordneten Vorrichtung zur Zufuhr eines Polyurethan-Flüssigschaums mit im wesentlichen senkrecht nach unten gerichteter Auslassöffnung sowie einer bezüglich der Bewegungsrichtung des Transportbandes (1) rückseitig der Aufbringungsstelle für den Froth angeordneten, sich ortsfest quer über das Transportband erstreckenden, im wesentlichen senkrechten Barriere (6) in Form einer ebenen Platte.

## Claims

1. Process for the production of polyurethane foam by application of a froth onto the conveyor belt of a block-foam installation, the froth being applied onto the lower conveyor belt in substantially vertical free fall, **characterised in that** flowing of the froth contrary to the direction of movement of the conveyor belt (1) is prevented by a stationary, substantially vertical barrier (6) in the form of a flat plate arranged transversely on the conveyor belt.

2. Process according to claim 1, **characterised in that** the froth is generated in a foaming device extending over less than 20 % of the width of the conveyor belt at a right angle to the conveyor belt, said foaming device being designed as a pressure-reducing unit and having ideally a substantially symmetrical circular shape.

3. Device for producing polyurethane foam, consisting of a continuous block-foam installation known per se, a device arranged above the conveyor belt of the block-foam installation for the supply of a polyurethane liquid foam with an outlet opening directed downward in substantially vertical manner as well as a substantially vertical barrier (6) in the form of a flat plate which is arranged rearward of the application-point for the froth with respect to the direction of movement of the conveyor belt (1) and which extends in stationary manner across the conveyor belt.

## Revendications

1. Procédé pour la fabrication de mousse de polyuréthane par application d'une écume sur la bande de transport d'une installation de production de blocs de mousse, dans lequel on applique l'écume en chute libre sensiblement verticale sur la bande de transport inférieure, **caractérisé en ce que** l'on empêche un écoulement de l'écume à l'encontre de la direction du mouvement de la bande de transport (1) au moyen d'une barrière stationnaire (6) sensiblement verticale, sous la forme d'une plaque plane, agencée perpendiculairement sur la bande de transport.

2. Procédé selon la revendication 1, **caractérisé en ce que** l'écume est produite dans un dispositif de moussage qui s'étend perpendiculairement à la bande de transport et sur moins de 20 % de la largeur de la bande de transport, réalisé sous la forme d'une unité à réduction de pression, présentant de façon idéale sensiblement une forme à symétrie circulaire.

3. Appareil pour la production de mousse de polyuréthane, comprenant une installation de production de blocs de mousse en continu, connue par elle-même, un dispositif agencé au-dessus de la bande de transport de l'installation de production de blocs de mousse pour admettre une mousse liquide de polyuréthane avec une ouverture de sortie dirigée sensiblement verticalement vers le bas, ainsi qu'une barrière sensiblement verticale (6) sous la forme d'une plaque plane, disposée du côté postérieur de l'emplacement d'application pour l'écume, par référence à la direction de déplacement de la bande de transport (1) et s'étendant de façon stationnaire transversalement au-dessus de la bande de transport.
